Europäisches Patentamt

European Patent Office

Office européen des brevets

(19)

(11) Publication number: **0 194 367**
**A1**

# EUROPEAN PATENT APPLICATION

(12)

(21) Application number: **85301769.7**

(22) Date of filing: **14.03.85**

(51) Int. Cl.⁴: **B 01 J 21/12**
**C 10 G 11/05, B 01 J 29/06**

(43) Date of publication of application:
**17.09.86 Bulletin 86/38**

(84) Designated Contracting States:
**BE DE FR GB IT NL SE**

(71) Applicant: **MOBIL OIL CORPORATION**
**150 East 42nd Street**
**New York New York 10017(US)**

(72) Inventor: **Cormier, William Edward, Jr.**
**4140 Henhawk Court**
**Ellicott City Maryland 21043(US)**

(72) Inventor: **Pasquale, Gary Michael**
**141 Shire Drive**
**Sewell New Jersey 08020(US)**

(72) Inventor: **Stover, William Albert**
**336 South Belvidere Drive**
**Hampstead North Carolina 28443(US)**

(74) Representative: **West, Alan Harry**
**Mobil Court 3 Clements Inn**
**London WC2A 2EB(GB)**

(54) **High density catalyst and method of preparation and use thereof.**

(57) Preparation of a cracking catalyst by mixing silica and alumina solutions at a pH of 3.0 to 4.5 produces a catalyst of high density. Use of the catalyst in the fluidized catalytic cracking (FCC) process reduces $SO_x$ emissions from the FCC regenerator.

EP 0 194 367 A1

Croydon Printing Company Ltd.

## HIGH DENSITY CATALYST AND METHOD
## OF PREPARATION AND USE THEREOF

The present invention relates to a method of preparing a high density cracking catalyst which comprises active catalytic fines dispersed in a matrix and the use thereof in a catalytic cracking process.

In fluidized catalytic cracking (FCC) systems a fluidized bed of particulate catalyst is continuously cycled between a cracking zone and a catalyst regeneration zone. Hydrocarbon cracking in the reaction zone deposits coke on the catalyst. The cracked hydrocarbons are separated from the coked catalyst and withdrawn. The coked catalyst is stripped of volatiles and passed into the catalyst regenerator where coked catalyst contacts an oxygen-containing gas to burn off coke and heat the catalyst. Hot regenerated catalyst then contacts the hydrocarbon stream in the cracking zone. A flue gas is formed by burning coke in the regeneration zone.

The hydrocarbon feeds processed in commercial FCC units normally contain sulfur. A significant portion of this sulfur is deposited on the catalyst in the coke. The flue gas formed by burning coke in the catalyst regenerator contains $SO_x$, i.e., sulfur dioxide and/or sulfur trioxide.

Known methods of reducing $SO_x$ emissions from the FCC catalyst regenerator include desulfurizing the regenerator flue gas by conventional stack gas scrubbing or desulfurizing the hydrocarbon feed in a separate desulfurization unit. These methods are expensive.

Catalyst modification to reduce $SO_x$ emissions from FCC regenerators is much cheaper than currently available methods.

It has been suggested in U.S. Patent No. 3,835,031 to reduce the amount of sulfur oxides in FCC regenerator flue gas by impregnating a Group II-A metal oxide onto a conventional silica-alumina cracking catalyst. The attrition encountered when using unsupported Group II-A metals is thereby reduced. Group II-A metal oxides, such as magnesia, when used as a component of cracking catalysts, have a highly undesirable effect on the activity and selectivity of the cracking catalyst. The addition of a Group II-A metal reduced the yield of the liquid hydrocarbon fraction and gasoline octane.

Other patents propose reduction of $SO_x$ emissions from regenerator flue gas by contacting the sulfur compounds with an oxidation promoter and reactive alumina. The resulting solid aluminum-sulfate compound, formed in the regenerator, is reduced to hydrogen sulfide gas and reactive alumina in the reaction zone. Hydrogen sulfide removal from the reactor effluent is cheaper than feed desulfurization or flue gas desulfurization. The alumina can be impregnated on the standard catalyst, incorporated into the catalyst during manufacture, or admixed with a standard catalyst as a separate particle.

It is known to impregnate standard catalysts with rare earth oxides such as $Cr_2O_3$, $MnO$, or $CoO$, alone or in combinations, or rare earth oxide with a platinum group metal oxidation promoter to reduce the sulfur content of coke and shift the sulfur removal to the cracked hydrocarbon effluent.

While the above-mentioned disclosures teach methods of reducing $SO_x$ emissions by catalyst modification, the disclosed processes require the addition of elements or compounds to the cracking catalyst.

Cracking catalysts are solid materials which have acidic properties. Because of the nature of the reactions taking place, the catalyst must have high porosity. Furthermore, since the catalyst circulates rapidly between reaction zones and burning, or regeneration zones, it must also have resistance to abrasion, temperature changes and the like.

Another problem encountered with conventional FCC catalysts is catalyst attrition, aging and loss of activity and selectivity. The trend in commercial fluid catalytic cracking is high density catalysts. The higher density in conjunction with increased attrition resistance

0194367

is a major factor in improving catalyst retention in a fluidized cracking unit. As a result, the make-up rate of fresh catalyst can be reduced and dust emissions from the flue gas stacks are lowered. At the same time, however, the characteristic of high density must not result in the loss of product selectivity.

Many FCC catalysts comprise a gel of silica-alumina in which is dispersed particles of crystalline zeolitic catalytic material. One method used commercially for manufacturing the catalysts involves formation of a silica-alumina co-gel, addition of small particles of zeolite to the co-gel, and formation of catalyst particles by spray-drying.

U.S. Patent No. 4,219,446 discloses producing an attrition resistant zeolite-containing catalyst by preparing a zeolite-containing silica-alumina hydrogel. One of the critical aspects of the invention is nozzle-mixing an acid alum solution and an aqueous solution of sodium silicate which comprises finely dispersed kaolin clay and calcined rare earth exchanged zeolite Y. The mixture has a pH above 9.

U.S. Patent No. 3,957,689 discloses an attrition resistant zeolite hydrocarbon conversion catalyst made by decreasing the pH of a sodium silicate solution to a pH of 2.0-3.2 by adding a mixed sulfuric acid-aluminum sulfate solution to form a buffered silica sol, adding clay before, during or after sol formation, preparing a water slurry of a crystalline zeolite and adjusting the pH to about 3-5, mixing the slurry with the buffered silica sol-clay slurry to prepare a spray dried feed slurry.

U.S. Patent Nos. 3,520,828 and 3,939,058 disclose preparing the silica and alumina gel via mozzle mixing of a sodium silicate solution and an acid alum solution to form a hydrosol containing crystalline aluminosilicate fines. The gelled hydrosol has a pH of about 9.0.

Despite the many advances which have been made, it would be beneficial if FCC catalysts could be produced which would reduce $SO_x$ emissions or which would be more attrition resistant and denser. Ideally, both improved catalyst properties and reduced $SO_x$ emissions could be achieved.

Accordingly, the present invention provides a method of preparing a high density FCC catalyst comprising mixing a basic solution containing silica with an acidic solution containing alumina, continuously maintaining said mixture at a pH of 3.0 to 4.5 from the initial mixing to the formation of a gel, homogenizing the gel and spray drying the homogenized gel to produce a high density FCC catalyst.

In another embodiment, the present invention provides a process for cracking sulfur containing hydrocarbon feed in the presence of a conventional FCC catalyst operated at conventional FCC conversion conditions, wherein at least a portion of the sulfur contained in the feed hydrocarbons is deposited on the catalyst in the form of coke, and released to the atmosphere as $SO_x$ during coke burnoff, the improvement comprising using as the catalyst a high density FCC catalyst prepared by mixing a basic solution containing silica with an acidic solution containing alumina, continuously maintaining said mixture at a pH of 3.0 to 4.5 from the initial mixing to the formation of a gel, homogenizing the gel and spray drying the homogenized gel to produce a high density FCC catalyst, whereby the amount of $SO_x$ in regenerator flue gas is substantially reduced.

## GEL FORMATION

An acid alum solution and a sodium silicate stream containing a substantial portion of active zeolite fines are pumped to a mixing apparatus where the matrix components are mixed in such a manner that the mixture is continuously maintained at a pH no greater than 4.5. The reactants must be intimately mixed to maintain the low pH. Mixing the matrix components through a nozzle or vigorously stirring the components simultaneously with or immediately following contact maintains the desired low pH, although nozzle mixing is preferred.

The acid alum solution is an acidic solution comprising an aqueous solution of sulfuric acid and aluminum sulfate. The sodium silicate stream is a basic solution comprising a mixture of an aqueous sodium silicate solution.

After the acid alum solution and sodium silicate stream have been mixed, the gel mixture is immediately homogenized, as for example, by being passed sequentially through a Charlotte Mill and Matin-Gaulin homogenizer. The material is then spray dried. The resulting spray dried product can then be ion exchanged with ammonium ions such as from an aqueous ammonium sulfate solution and then water washed to remove the sulfate. The washed product can then be further ion exchanged with rare earth ions. It will be understood that rare earth ions include those contained in a salt or a mixture of salt wherein the anion can be a chloride, nitrate or acetate. The rare earth ion may be, for example, cerium, lanthanum, praseodymium, neodymium, samarium and ytterium. Mixtures of rare earth salts can be used.

The steps of ion exchanging and spray drying are conventional and well-known in the art. For example, typical ion exchange procedures are described in U.S. Patent Nos. 3,140,249; 3,140,251 and 3,140,253. Such procedures comprise contacting the zeolite with the salt of the desired replacing ion in warm water, followed by drying at 75 to 300°C.

According to the invention, catalysts which are prepared by continuously maintaining the gelled matrix at a pH of less than 4.5 and, preferably at a pH of between about 3-4.5 from initial mixing to completion thereof can be advantageously used as cracking catalysts in conventional FCC units.

## ZEOLITE

The crystalline aluminosilicate zeolite which can be used can be chosen among the naturally occuring crystalline zeolites such as faujasite, mordenite, erionite, etc. Synthetic crystalline aluminosilicate zeolites which may be used include large pore materials such as zeolite X and zeolite Y. The preferred crystalline zeolite useful in the catalyst forming method of the present invention as well as for use in the fluid catalytic cracking process is a calcined rare earth exchanged zeolite Y.

In addition to the large pore zeolites discussed above, it will frequently be beneficial to use, as all or only a portion, of the zeolite eventually incorporated into the finished catalyst, a shape selective zeolite.

By shape selective zeolite is meant a catalyst with a constraint index of 1 to 12. The constraint index is calculated as follows:

$$\text{Constraint Index} = \frac{\log_{10}(\text{fraction of n-hexane remaining})}{\log_{10}(\text{fraction of 3-methylpentane remaining})}$$

The constraint index approximates the ratio of the cracking rate constants for the two hydrocarbons.

| ZEOLITES | CONSTRAINT INDEX |
|---|---|
| ZSM-5 | 8.3 |
| ZSM-11 | 8.7 |
| ZSM-12 | 2 |
| ZSM-38 | 2 |
| ZSM-35 | 4.5 |
| TMA Offretite | 3.7 |
| Beta | 0.6 |
| ZSM-14 | 0.5 |
| H-Zeolon | 0.4 |
| REY | 0.4 |
| Amorphous Silica-Alumina | 0.6 |
| Erionite | 38 |

The class of zeolites defined herein is exemplified by ZSM-5, ZSM-11, ZSM-12, ZSM-35, ZSM-38 and other similar materials.

Natural zeolites may sometimes be converted to this type zeolite catalyst by various activation procedures and other treatments such as base exchange, steaming, alumina extraction and calcination. Natural minerals which may be so treated include ferrierite, brewsterite, stilbite, dachiardite, epistilbite, heulandite and clinoptilolite.

The preferred shape selective zeolites for use herein will have a silica/alumina ratio in excess of 12 to 1. Zeolites with very high silica/alumina ratios, e.g., 70 to 1, 100 to 1, 300 to 1, or even higher, such as 3,000 to 1 or 30,000 to 1, may also be used herein.

In general, higher silica alumina ratio materials have lower acid activities, but better stability.

Other fines that have no effect on the cracking action of the catalyst but whose presence increases the attrition resistance of a final catalyst may also be added. Among these latter solids can be mentioned the alumina and kaolin clay matrix components. In addition, recycled fines from the spray drying step may be used.

## EXAMPLE 1

The catalyst consists of 20 wt. % rare earth exchanged and calcined zeolite Y (REY) in a silica-alumina-clay matrix. The REY is formed from ion exchange of the sodium form of zeolite Y such that 68% of the sodijm cations have been replaced by rare earth cations including Sm, Nd, Pr, Ce, and La having the distribution as indicated in Table 1. After ion exchange, the resulting REY product was calcined for about 10 minutes at 649°C (1200°F). The chemical composition of the REY is presented in Table 1.

The REY was incorporated in a gel matrix consisting of 60.5 wt. % $SiO_2$, 4.5 wt. % $Al_2O_3$ and 35 wt. % clay. The catalyst was prepared as follows: 2100 grams of Georgia kaolin clay on a dry basis was mixed with 7.3 grams Q-brand sodium silicate (8.9 wt. % $Na_2O$, 28.7 wt. % $SiO_2$) and 3750 grams $H_2O$ and ground for one hour in a ball mill. The clay slowly was brought to 30% solids by adding 1150 grams $H_2O$. 1500 grams of the REY on a dry basis was mixed with 9 grams of a dispersant, "Marasperse N", and 3000 grams $H_2O$ and ground for one hour in a ball mill. The REY slurry was brought to 25% solids by adding 1500 grams $H_2O$. 1263 kg (27.83 pounds) Q-brand sodium silicate was mixed well with 7.51 kg (16.56 pounds) $H_2O$ and the clay and REY slurries were added, stirring continuously until the solution was used. An acid alum solution was prepared by mixing 1.65 kg (3.64 pounds) $Al_2(SO_4)_3$ (MW=616) with 27.35 kg (60.29 pounds) $H_2O$ and 0.41 kg (0.9 pound) $H_2SO_4$ (96.2 percent acid).

The acid alum and clay, REY, silicate solutions were mixed through a 0.74 mm (0.029 inch) diameter nozzle at solution rates of 345 cc/min for the acid alum and 340 cc/min for the clay, REY, silicate solution.  The resulting mixture had a pH of 4.0-4.15.

The mixture was immediately homogenized and spray dried with an inlet temperature of 371°C (700°F) and an outlet temperature of 177°C (350°F).

The resulting spray dried product was ion exchanged with 5% aqueous ammonium sulfate solution and then water washed substantially free of sulfate.  The washed product was then further ion exchanged with 1% aqueous solution of rare earth chloride, water washed substantially free of chloride and dried at 121°C (250°F) for about 40 hours in air.  The physical and chemical properties of the final catalyst are given in Table 2.

## EXAMPLE 1A

The catalyst of Example 1 was impregnated with a solution of Pt $(NH_3)_4 Cl_2$ containing enough Pt to impregnate the catalyst with 3 ppm.  Enough solution was used to fill the catalyst pores.  After impregnation, the catalyst was dried in air for 16 hours at 121°C (250°F).

## EXAMPLE 2

This example describes an alternative method of forming FCC catalyst containing 20 wt. % rare earth exchanged and calcined REY from Example 1 in a high-density semi-synthetic silica-alumina-clay matrix.  The chemical composition of the REY is given in Table 1.

The REY was incorporated in a high-density clay-gel matrix containing 67.9% $SiO_2$, 10.1% $Al_2O_3$, 2% $ZrO_2$ and 20% clay.  The matrix was prepared by first dissolving in mixing tank A, 2365 grams of aluminum sulfate (17.2% $Al_2O_3$) in 30.1 kg (66.4 pounds) water, a portion of which was ice.  The pH of the solution was adjusted to 1.4 at 0°C (32°F) by adding 120cc concentrated sulfuric acid.

In mixing tank B, 930 grams of Georgia kaolin clay (86% solids) were added to 24.2 kg (53.4 pounds) water, a portion of which was ice. To this slurry, 9425 grams of Q-brand sodium silicate (PQ Corporation, 8.9% $Na_2O$, 28.8% $SiO_2$) was added uniformly over a thirty minute period. The temperature of the resulting slurry was 0°C (32°F) and the pH was 11.6.

The contents of mixing tank B were then slowly added to mixing tank A. After 7500cc of slurry from mixing tank B had been added, the mixture had a pH of 3.6 at 4°C (40°F). 200cc of concentrated sulfuric acid was added to reduce the pH to 1.7. An additional 7500cc from mixing tank B was added until the mixture pH was 3.4 at 8°C (47°F). An additional 200cc of concentrated sulfuric acid was added to mixing tank A, reducing the pH to 1.9 at 11°C (52°F). The remainder of the slurry from mixing tank B was then added slowly to mixing tank A. The resultant gel-slurry had a pH of 3.6 at 13°C (55°F).

Next, a slurry prepared by combining 167 grams of sodium zirconium silicate (48% $ZrO_2$), 108cc of concentrated sulfuric acid and 1620cc water was added to the gel-slurry over a 15 minute period, reducing the pH of the entire mixture to 3.4.

The REY (20 wt. %) was added to the clay-gel mixture so formed. The pH was then adjusted to 4-4.5 by addition of 682cc of 50 wt. % sodium hydroxide. The mixture was filtered to remove water and dissolved salts and then reslurried with 10.4 kg (23 pounds) of water. The gel-zeolite mixture was then homogenized and spray dried at 371°C (700°F) inlet temperature, 177°C (350°F) outlet temperature.

The resulting spray dried product was ion exchanged with 5% aqueous ammonium sulfate solution, then water washed substantially free of sulfate. The washed product was then further ion exchanged with 1% aqueous solution of rare earth chloride, water washed substantially free of chloride and then dried at 121°C (250°F). The physical and chemical properties of the final catalyst are given in Table 2.

## EXAMPLE 3

The catalyst of this example, consists of 25 wt. % ZSM-5 in a silica-alumima matrix. The gel matrix consists of 93 wt. % $SiO_2$ and 7 wt. % $Al_2O_3$.

80.34 pounds of Q-brand sodium silicate (8.9 wt. % $Na_2O$, 28.7 wt. % $SiO_2$) was mixed with 27.8 kg (61.3 pounds) of $H_2O$. An acid-alum solution was prepared by mixing 4.75 kg (10.48 pounds) of $Al_2(SO_4)_3$ (MW=616) with 50.1 kg (110.5 pounds) of $H_2O$ and 1.88 kg (4.15 pounds) of $H_2SO_4$ (96.3 wt. % acid).

The acid alum and silicate solutions were intimately mixed in a nozzle at rates of 410 and 365 cc/min, respectively. The resulting mixture had a pH of 3.5.

The pH was increased to 4.5 by adding $NH_4OH$ (29.6 wt. %) causing the mixture to gel while stirring continuously.

A sufficient quantity of a 20 wt. % slurry of ZSM-5 and water was added to the gel to give 25 wt. % ZSM-5 in the final catalyst, on a dry basis.

The gel matrix-ZSM-5 mixture was filtered to 16 wt. % solids and reslurried to 11 wt. % solids with $H_2O$. This mixtrure was immediately homogenized and spray dried with an inlet temperature of 371°C (700°F) and an outlet temperature of 177°C (350°F).

The resulting spray dried product was ion exchanged with 5 wt. % aqueous ammonium sulfate solution and water washed substantially free of sulfate. The product was then dried at 121°C (250°F) for about 40 hours. The physical and chemical properties of the final catalyst are given in Table 2.

## EXAMPLE 4

This example describes another process of forming a high-density FCC catalyst containing 25 wt. % ZSM-5 in a semi-synthetic matrix consisting of 74.4 wt. % $SiO_2$, 5.6 wt. % $Al_2O_3$ and 20 wt. % clay.

The matrix was prepared by first dissolving, in mixing tank A, 1306 grams of aluminum sulfate in 25.6 kg (56.5 pounds) water, a portion of which was ice.  The pH of the solution was adjusted to 0.7 at 25°C (77°F) by addition of 537cc of concentrated (96.2 wt. %) sulfuric acid.

In mixing tank B, 930 grams of Georgia kaolin clay were added to 28.8 kg (63.4 pounds) water, a portion of which was ice.  To this slurry 10,333 grams of Q-brand sodium silicate (PQ Corporation, 8.9 wt. % $Na_2O$, 28.8 wt. % $SiO_2$) was added uniformly over a 30 minute period.  The temperature of the resulting slurry was 6°C (43°F) and the pH was 11.4.

The contents of mixing drum B were then added to mixing drum A over a one hour period.  The final mixture pH was 3.6 at 19°C (67°F).  The pH of the mixture was adjusted to 4.1 by addition of 330cc of 50 wt. % sodium hydroxide.

The ZSM-5 (25 wt. %) was added to the clay-gel mixture so formed and the zeolite-clay-gel mixture was filtered to remove water and dissolved salts.  It was then reslurried with water, homogenized and spray dried at 371°C (700°F) inlet temperature 177°C (350°F) outlet temperature.

The resulting spray dried product was ion exchanged with 5 wt. % aqueous ammonium sulfate solution, then water washed substantially free of sulfate and then dried at 121°C (250°F).  The physical and chemical properties of the final product are given in Table 2.

## EXAMPLE 5

The catalyst of this example was prepared as follows using REY from Example 1.  The matrix of this catalyst was also a gel matrix consisting of 60.5 wt. % $SiO_2$, 4.5 wt. % $Al_2O_3$ and 35 wt. % clay.  1750 grams of Georgia kaolin clay on a dry basis was mixed with 49.9 kg (110.1 pounds) $H_2O$.  10,495 grams of Q-brand sodium silicate was added slowly over a 30 minute period.  The admixture was then heated to 49°C (120°F) and 541cc of sulfuric acid (96.7 wt. % acid) was added at a uniform rate over one hour to adjust the pH to about 10.4.  The resulting gel which formed was aged at 49°C (20°F) for 30 minutes and then cooled to ambient temperature.  Alumina was then incorporated by adding a 20 wt. % aqueous solution of aluminum sulfate (17.2 wt. % $Al_2O_3$) over a 30 minute period to a pH of about 3.9. The pH of the mixture was then adjusted to 4.5 to prevent aging or deterioration of the gel, using 50 wt. % NaOH in water. The REY (20 wt. %) was added to the clay-gel mixture.

The resulting composite was homogenized and spray dried as described in Example 1 and the spray dried product was ion exchanged and dried again as described in Example 1. The physical and chemical properties of the final product are given in Table 2.

## EXAMPLES 6, 7, 8 and 9

The catalysts of these examples are commercial cracking catalysts sold under the names Super-D (manufactured by Davison Chemical, Division of W. R. Grace & Co.), FS-30, FOC-90 and OPC-4 (all manufactured by Filtrol Corp.), respectively. The physical properties of each are given in Table 2.

## EXAMPLE 10

The starting material for the catalyst of this example is a commercial catalyst sold under the name HFZ-20 (manufactured by Engelhard Minerals & Chemical Corp.). This material was ion exchanged with a solution of rare earth chloride in water containing enough rare earth chloride to give 3 wt. % $RE_2O_3$ on the final catalyst. After exchange, the catalyst was water washed substantially chloride free and dried in air for about 16 hours at 121°C (250°F).

## EXAMPLE 10A

The starting material for this example is the same as for Example 10. This material was exchanged with the same solution as in Example 10 which also included $Pt(NH_3)_4Cl_2$, enough to give 3 ppm Pt on the final catalyst. The catalyst was washed and dried as in Example 10.

EXAMPLE 11

The catalyst of this example consists of 25 wt. % ZSM-5 in a silica-alumina matrix. The gel matrix consists of 93 wt. % $SiO_2$ and 7 wt. % $Al_2O_3$, percentages by weight.

The catalyst was prepared as follows: 12.95 kg (28.55 pounds) of Q-brand sodium silicate (8.9 wt. % $Na_2O$, 28.7 wt. % $SiO_2$) were mixed with 9.8 kg (21.6 pounds) of $H_2O$. An acid-alum solution was prepared by mixing 1691.0 grams of $Al_2(SO_4)_3$ with 17.8 kg (39.2 pounds) of $H_2O$ and 670.2 grams of $H_2SO_4$ (96.3 wt. % acid).

The acid-alum and silicate solutions were pumped separately but at the same time into a 30 gallon mixing drum at rates of 380 and 365cc/minute, respectively. 6000cc of $H_2O$ were placed in the bottom of the mixing drum so that mixing could begin as soon as the solutions contacted the water. In the bottom of the barrel was placed a stirrer. The resulting mixture had a pH of 3.5. Additionally, ice was added to lower the temperature to 13°C (55°F).

The pH was increased to 4.5 by adding 195cc of $NH_4OH$ (29.6 wt. %) causing the mixture to gel while stirring continuously. A sufficient quantity of a 20 wt. % slurry of ZSM-5 and water was added to the gel to give 25 wt. % ZSM-5 in the final catalyst on a dry basis.

The gel matrix-ZSM-5 mixture was filtered to 18 wt. % solids and reslurried to 12 wt. % solids with 13.8 kg (30.38 pounds) of $H_2O$. This mixture was immediately homogenized and spray dried with an inlet temperature of 371°C (700°F) and outlet temperature of 177°C (350°F).

The resulting spray dried particles were ion exchanged with 5 wt. % aqueous ammonium sulfate solution and then water washed substantially free of sulfate. The particles were then dried at 121°C (250°F) for about 40 hours. The physical and chemical properties of the final catalyst are given in Table 2.

### TABLE 1

#### CHEMICAL COMPOSITION OF CALCINED REY

#### OF EXAMPLES 1, 2 AND 5

| | |
|---|---|
| Na, wt. % | 3.2 |
| Total $RE_2O_3$, wt. % | 15.9 |
| $Sm_2O_3$, wt. % | 0.10 |
| $Nd_2O_3$, wt. % | 3.70 |
| $Pr_6O_{11}$, wt. % | 1.05 |
| $CeO_2$, wt. % | 1.61 |
| $La_2O_3$, wt. % | 9.47 |
| $SiO_2$, wt. % | 61.4 |
| $Al_2O_3$, wt. % | 21.7 |

From a comparison of the physical and chemical properties of the individual catalysts set forth in Table 2, it can be seen that the packed density and pore volume of the catalysts formed in accordance with the present invention, Examples 1-4 and 11 are comparable to those of a typical commercial catalyst such as the catalyst of Example 6. In Example 5, a catalyst was formed with the same chemical composition as the catalyst of Example 1, but utilizing a different forming method. The catalyst of Example 5 has a more open structure as evidenced by the higher surface area and pore volume and lower packed density.

### EXAMPLE 12

Fresh catalysts from Examples 1 and 5-10 were steam treated in a fluidized bed for 4 hours at 760°C (1400°F) with 100% steam at atmospheric pressure. The steamed catalysts were used to crack a high-sulfur sour heavy gas oil, the properties of which are given in Table 3, in a fixed fluidized bed test unit which simulated FCC cracking. Tests conditions were 515°C (960°F) 1.0 minute on-stream.

## TABLE 2

PHYSICAL AND CHEMICAL PROPERTIES OF CATALYSTS

| Chemical Analysis | Ex. 1 | Ex. 2 | Ex. 3* | Ex. 4* | Ex. 5 | Ex. 6 |
|---|---|---|---|---|---|---|
| $Na_2O$, wt. % | 0.15 | 0.19 | 0.03 | 0.12 | 0.12 | 0.70 |
| $RE_2O_3$, wt. % | 4.83 | 4.41 | --- | --- | 4.95 | 3.02 |
| $SiO_2$, wt. % | 70.1 | 71.1 | 86.6 | 81.4 | 70.1 | 61.0 |
| $Al_2O_3$, wt. % | 18.9 | 16.5 | 6.2 | 11.9 | 20.1 | 29.9 |
| | | | | | | |
| Physical Properties | | | | | | |
| Packed Density, gm/cc | 0.83 | 0.97 | 0.87 | 0.76 | 0.61 | 0.86 |
| Pore Volume, cc/gm | 0.22 | 0.09 | 0.23 | 0.26 | 0.55 | 0.23 |
| Surface Area, $m^2$/gm | 96 | 96 | 167 | 249 | 181 | 102 |

* Physical properties for Examples 3 and 4 were determined after treatment 0.5 hours, 649°C (1200°F), 100% $N_2$ atmospheric pressure in a fluidized bed. All other catalysts were steamed.

## TABLE 2 (cont.)

### PHYSICAL AND CHEMICAL PROPERTIES OF CATALYSTS

| Chemical Analysis | Ex. 7 | Ex. 8 | Ex. 9 | Ex. 10 | Ex. 10a | Ex. 11 |
|---|---|---|---|---|---|---|
| $Na_2O$, wt. % | 0.52 | 0.69 | 0.54 | 0.92 | 0.91 | 0.06 |
| $RE_2O_3$, wt. % | 2.99 | 0.49 | 3.49 | 3.03 | 3.41 | --- |
| $SiO_2$, wt. % | 51.0 | 50.5 | 47.2 | 37.8 | 37.6 | 87.6 |
| $Al_2O_3$, wt. % | 40.3 | 40.4 | 43.6 | 57.4 | 57.2 | 6.4 |

| Physical Properties | | | | | | |
|---|---|---|---|---|---|---|
| Packed Density, gm/cc | 0.85 | 0.73 | 0.79 | 0.90 | 0.94 | 0.77 |
| Pore Volume, cc/gm | 0.37 | 0.46 | 0.41 | 0.42 | 0.42 | 0.24 |
| Surface Area, $m^2$/gm | 137 | 141 | 129 | 253 | 239 | --- |

## TABLE 3

### HIGH SULFUR SOUR HEAVY GAS OIL

| | |
|---|---|
| Gravity, °API | 24.3 |
| Density, g/cc | 0.91 |
| Aniline Pt. °F/°C | 171/77 |
| Sulfur, wt. % | 1.87 |
| Nitrogen, wt. % | 0.10 |
| Basic Nitrogen, ppm | 327 |
| Conradson Carbon, wt. % | 0.28 |
| Viscosity, KV at 99°C (210°F) | 3.6 |
| Bromine No. | 4.2 |
| Refractive Index at 21°C (70°F) | 1.5080 |
| Hydrogen, wt. % | 12.3 |
| Molecular wt. | 358 |
| Pour Point, °F | 85 |
| °C | 29 |
| Paraffins, wt. % | 23.5 |
| Naphthenes, wt. % | 32.0 |
| Aromatics, wt. % | 44.5 |
| $C_A$, wt. % | 18.9 |

Test conditions and product distributions are given in Table 4. The following abbreviations are used:

$$G \quad = \quad C5^+ \text{ Gasoline} \quad = \quad \text{Gasoline}$$

$$A \quad = \quad \text{Alkylate}$$

$$G+A \quad = \quad \text{Gasoline} + \text{Alkylate}$$

0194367

## TABLE 4

| Catalyst Example | 1 | 5 | 6 |
|---|---|---|---|
| Catalyst/oil, wt/wt | 2.5 | 2.0 | 2.5 |
| WHSV, $Hr^{-1}$ | 24.0 | 30.0 | 24.0 |
| Conversion, % Vol | 70.8 | 70.0 | 70.3 |
| Gasoline, % Vol | 55.5 | 57.5 | 55.2 |
| Total $C_4$, % Vol | 16.4 | 13.2 | 15.3 |
| Dry Gas, % Vol | 8.5 | 7.8 | 8.5 |
| Coke, wt. % | 4.0 | 3.5 | 4.4 |
| G + A | 76.1 | 76.2 | 75.0 |
| RON + 0, G | 88.7 | 86.9 | 87.6 |
| RON + 0, G + A | 90.1 | 88.6 | 89.2 |
| Conversion/Coke, Vol/Wt | 17.7 | 20.0 | 16.0 |
| G/Conversion, Vol/Vol | 0.784 | 0.821 | 0.785 |
| G/Coke, Vol/Wt | 13.9 | 16.4 | 12.5 |

The catalyst of the present invention (Example 1) has the same activity as the commercial catalyst, Super-D (Example 6) as shown by equivalent conversion at the same catalyst/oil ratio. The catalyst of Example 1 is less active than the catalyst of Example 5 because of the higher diffusional resistance provided by the more closed structure. The catalyst of Example 1 yields as much gasoline as Super-D. This is accompanied by an increase in the research clear octane number. The total $C_4$ yield of the catalyst of the present invention is greater and with less coke formation than Super-D.

Lower secondary cracking rates due to the greater diffusivity are responsible for the higher gasoline yield and lower $C_4$, dry gas and coke yields of Example 5 catalyst. This also causes the octane number of the gasoline to be lower as the lower octane components of the gasoline are not cracked out.

When the potential akylate of the three catalysts is included in the analysis, the total gasoline yield of Example 1 is increased to the amount of Example 5. A significant octane advantage still exists for the gasoline of Example 1. The Super-D catalyst has a deficit in both total gasoline yield and octane number.

## EXAMPLE 13

The sulfur emissions from coke burnoff were determined by oxidizing spent catalyst in oxygen at 649°C (1200°F) and passing the effluent gas through a 3% solution of hydrogen peroxide in water, thus converting $SO_2$ to $SO_3$ and absorbing all of the $SO_3$. The sulfate formed was titrated as sulfuric acid with standard base NaOH.

Table 5 presents the sulfur emissions of the example catalysts in several ways. The sulfur on-catalyst (S/CAT) figures give an indication of the amount of sulfur released per weight of catalyst while the sulfur in coke (% S/C) values relate the sulfur released to the amount of coke burned. The third set of figures, sulfur per volume of feed converted, is influenced by the activity of the catalysts.

## TABLE 5

### SULFUR EMISSIONS OF COKED CATALYSTS

| Catalyst Example | % C/Cat | S/CAT, ppm | % S/C | lb S/bbl feed converted | Kg S/m$^3$ |
|---|---|---|---|---|---|
| 1 | 1.338 | 71 | 0.53 | 0.093 | 0.27 |
| | 1.378 | 79 | 0.57 | 0.089 | 0.25 |
| 1a | 1.399 | 69 | 0.49 | 0.092 | 0.26 |
| 5 | 1.562 | 151 | 0.96 | 0.189 | 0.54 |
| 6 | 1.487 | 280 | 1.88 | 0.366 | 1.05 |
| 7 | 1.511 | 184 | 1.18 | 0.230 | 0.66 |
| 8 | 0.983 | 157 | 1.72 | 0.215 | 0.61 |
| 9 | 1.962 | 324 | 1.65 | 0.398 | 1.14 |
| 10 | 2.257 | 155 | 0.69 | 0.179 | 0.51 |
| 10a | 2.259 | 242 | 1.07 | 0.285 | 0.81 |

From Table 5, it can be seen that when the matrix components of a fluid cracking catalyst are intimately mixed as previously described such that the pH is maintained at 3.0-4.5, a very substantial reduction of sulfur emissions results. At least a 50% reduction occurs compared to all catalysts in sulfur on catalyst. The effect of a platinum oxidation promoter in this example is demonstrated by the catalyst of Example 10a. Compared to the catalyst of Example 10, an increase in the sulfur emissions is measured. This has not been the case in commercial measurements of $SO_x$ emissions for units operating with some degree of promoted CO combustion.

F-1736 - 21 - 0194367

CLAIMS:

1.    A method of preparing a high density FCC catalyst comprising mixing a basic solution containing silica with an acidic solution containing alumina, continuously maintaining said mixture at a pH of 3.0 to 4.5 from the initial mixing to the formation of a gel, homogenizing the gel and spray drying the homogenized gel to produce a high density FCC catalyst.

2.    The method of Claim 1 wherein the basic solution containing silica is an aqueous sodium silicate solution.

3.    The method of Claim 1 wherein the acidic solution containing alumina is an aqueous acid-alum solution.

4.    The method of Claim 1 wherein a zeolite is added to the catalyst before spray drying.

5.    The method of Claim 4 wherein the zeolite is added to the basic solution containing silica.

6.    The method of Claim 4 wherein the zeolite is added to a mixture of silica and alumina.

7.    The method of Claim 4 wherein a large pore zeolite is added to the catalyst before spray drying.

8.    The method of Claim 4 wherein a rare earth exchanged zeolite Y is added to the catalyst before spray drying.

9.    The method of Claim 1 wherein a zeolite having a constraint index of 1 to 12 and a silica to alumina mole ratio above 12 is added to the catalyst prior to spray drying.

10. A fluidized catalytic cracking process in which a conventional feed stock contacts a conventional FCC catalyst under conventional FCC operating conditions, characterized in that the cracking catalyst has been prepared by the method of any of Claims 1 to 9.

11. A process for cracking a sulfur-containing hydrocarbon feed in the presence of a conventional FCC catalyst under conventional FCC conversion conditions, in which at least a portion of the sulfur contained in the feed hydrocarbons is deposited on the catalyst in the form of coke, and released to the atmosphere as $SO_x$ during coke burnoff, characterized in that the amount of $SO_x$ in regenerator flue gas is substantially reduced by using as the catalyst a high density FCC catalyst prepared by mixing a basic solution containing silica with an acidic solution containing alumina, continuously maintaining the mixture at a pH of 3.0 to 4.5 from the initial mixing to the formation of a gel, homogenizing the gel and spray drying the homogenized gel to produce a high density FCC catalyst.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A-2 280 431  (W.R. GRACE & CO.) <br> * Page 2, lines 3-39; page 3, lines 1-37 * & US - A - 3 957 689 (Cat. D) | 1-4,6, 7,10 | B 01 J  21/12 <br> C 10 G  11/05 <br> B 01 J  29/06 |
| A | FR-A-2 400 484  (W.R. GRACE & CO.) <br> * Page 2, lines 4-30; page 3, lines 1-6,32-35 * | 1-4,6-8,10 | |
| X | FR-A-2 397 231  (W.R. GRACE & CO.) <br> * Page 4, lines 36-38; page 5, lines 1-24; page 8, lines 10-30; page 7, lines 9-37; page 13, lines 1,2 * | 1-5,7, 10 | |
| A | GB-A-2 010 320  (CHEVRON RESEARCH) <br> * Page 2, lines 125-130; page 3, lines 1-63; page 6, lines 109-130 * | 1,11 | **TECHNICAL FIELDS SEARCHED (Int Cl 4)** <br><br> B 01 J <br> C 10 G |

The present search report has been drawn up for all claims

| Place of search | Date of completion of the search | Examiner |
|---|---|---|
| THE HAGUE | 05-12-1985 | KERRES P.M.G. |

EPO Form 1503 03.82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document